Europäisches Patentamt

European Patent Office

Office européen des brevets

(11) Veröffentlichungsnummer: **0 474 898 A1**

## EUROPÄISCHE PATENTANMELDUNG

(21) Anmeldenummer: **90117433.4**

(22) Anmeldetag: **11.09.90**

(51) Int. Cl.5: **C04B** 35/10, C09K 3/14, B02C 17/20

(43) Veröffentlichungstag der Anmeldung: **18.03.92 Patentblatt 92/12**

(84) Benannte Vertragsstaaten: **BE DE ES FR GB IT NL**

(71) Anmelder: **Alcoa Chemie GmbH Giulinistrasse 2 W-6700 Ludwigshafen(DE)**

(72) Erfinder: **Geyer, Georg Andreas, Dipl.-Phys. Freiherr-vom-Steinstrasse 74 W-6730 Neustadt/Wstr. 16(DE)**

(54) Verfahren zur Herstellung von Mahlkörpern aus Aluminiumoxid ohne Brennhilfsmittel.

(57) Verfahren zur Herstellung von Mahlkörpern aus Aluminiumoxid, bei dem gemahlenes Aluminiumoxid mit einem organischen Bindemittel oder einem organischen Bindemittelgemisch vermischt, granuliert und anschließend verpreßt wird. Die erzeugten Formkörper werden dann in einem Schachtofen bei Temperaturen von 1500 °C bis 1850 °C gebrannt und in Mahlkörper umgewandelt.

EP 0 474 898 A1

Mahlkörper sind frei bewegliche Körper, mit deren Hilfe das Aufgabegut in Mühlen zerkleinert wird. Sie sind seit langem bekannt und können aus verschleißfestem Stahl, Porzellan, Flint oder Oxidkeramik bestehen. Mahlkörper aus oxidkeramischen Werkstoffen sind in der Regel tonfrei, da sie nur in diesem Zustand den an Mahlkörper gestellten hohen Anforderungen genügen. Anstelle von Ton werden bekanntermaßen organische Bindemittel eingesetzt.

Gemäß Stand der Technik werden Mahlkörper aus Oxidkeramik, z.B. solche in Kugelform, aus feinstgemahlenem Schmelzkorund oder calcinierter Tonerde hergestellt. Das mit einem Bindemittel vermischte Korundpulver (Aluminiumoxidpulver) wird dann durch isostatisches oder axiales Kaltpressen in Kugel- oder Zylinderform gebracht. Anschließend werden die Körper, gegebenenfalls nach Trocknung, durch Brand in Mahlkörper umgewandelt. Dabei werden die noch wenig festen Rohlinge in feste und harte, insbesondere verschleißfeste Mahlkörper umgewandelt.

Der Brand der Rohlinge erfolgt heute meistens in Tunnelöfen mit Gas-, Öl- oder Elektrobeheizung, in denen sie unter Anwendung von Brennhilfsmitteln, insbesondere Brennkapseln, auf Wagen durch einen Kanal mit stationärer Vorwärm-, Brenn- und Kühlzone durchgeschoben werden. Anschließend werden die Mahlkörper aus den Brennkapseln entfernt und ihrer Verwendung zugeführt. Die Brennkapseln, die ebenfalls aus Korund bestehen können, werden erneut mit Rohlingen gefüllt und auf Wagen durch den Ofen geschoben. Nach etwa 40 bis 50 Ofendurchläufen müssen die Brennkapseln erfahrungsgemäß erneuert werden.

Ein Nachteil des bekannten Verfahrens wird vor allem darin gesehen, daß der Brand in Tunnelöfen sehr arbeitsaufwendig und kostenintensiv ist. Die Erneuerung der Brennkapseln nach 40 bis 50 Ofendurchläufen wird wie ihre Füllung vor dem Brennvorgang und ihre Entleerung nach dem Brennvorgang als technisch überaltert und nicht mehr zeitgemäß angesehen, insbesondere hinsichtlich Kosten- und Energieaufwand.

Ein Nachteil der nach dem Stand der Technik hergestellten Mahlkörper wird oft auch darin gesehen, daß sie nur etwa 92 Gew.% Aluminiumoxid enthalten, also "stark" verunreinigt sind. Härte und Abriebfestigkeit der Mahlkörper genügen damit höchsten Ansprüchen nicht.

Es stellte sich somit die Aufgabe, ein Verfahren zur Herstellung von Mahlkörpern durch Verformung von gemahlenem Aluminiumoxid und anschließendes Brennen der erzeugten Formkörper zu finden, bei dem auf die Verwendung von Brennhilfsmitteln während des Brennvorganges verzichtet werden kann. Die geformten Mahlkörper sollen dem Ofen nach ihrer Herstellung in loser Form zugeführt werden.

Ein weiteres Ziel der vorliegenden Erfindung besteht darin, ein Herstellungsverfahren zu finden, dessen Kosten wesentlich unterhalb des zum Stand der Technik gehörenden Herstellungsprozesses liegen. Außerdem soll das neue Verfahren auf Aluminiumoxid hoher Reinheit anwendbar sein, beispielsweise auf Aluminiumoxid mit einem Aluminiumoxidgehalt von 99 Gew.% und mehr. Mit einem derartigen Aluminiumoxid, das großtechnisch durch Calcination von Aluminiumhydroxid und/oder Umkristallisation von Aluminiumoxid herstellbar ist, kann eine Verunreinigung des Mahlgutes durch Abrieb der Mahlkörper vermieden werden. Ein derartiges Aluminiumoxid wird auch als Sintertonerde bezeichnet.

Überraschenderweise kann die gestellte Aufgabe in der Weise gelöst werden, daß gemahlenes und gegebenenfalls desagglomeriertes Aluminiumoxid mit 0,5 bis 2,5 Gew.%, bezogen auf Aluminiumoxid, eines organischen Bindemittels oder organischen Bindemittelgemisches vermischt, granuliert und zu Mahlkörpern verpreßt wird, und die erzeugten Formkörper anschließend in einem Schachtofen bei Temperaturen von 1500 °C bis 1850 °C gebrannt und im Mahlkörper umgewandelt werden. Besonders günstige Brenntemperaturen liegen zwischen 1550 °C und 1800 °C. Brenntemperaturen oberhalb 1800 °C können zwar angewandt werden, verbessern aber die Eigenschaften der Mahlkörper nicht weiter.

Die Brenndauer der Mahlkörper im Schachtofen hängt zwangsläufig von der Brenntemperatur ab. Sie ist umso länger, je niedriger die Brenntemperatur ist. Andere Faktoren, beispielsweise Ofenkonstruktion und Ausmaße der zu brennenden Formkörper, beeinflussen ebenfalls die Brenndauer. Zu ihrer Festlegung wird vorteilhafterweise die beim Brennen erzielte Dichte des Mahlkörpers herangezogen (angestrebte Dichte). Erfindungsgemäß werden die Formkörper solange gebrannt, bis die Dichte der Mahlkörper mindestens 3,5 beträgt, insbesondere jedoch 3,75 bis 3,95, also in der Nähe der theoretischen Dichte liegt. Letztere beträgt nach ARMIN PETZOLD und JOACHIM ULBRICHT "Tonerde und Tonerdewerkstoffe" VEB Deutscher Verlag für Grundstoffindustrie, Leipzig, Seite 84: 3,99 bis 4,00 g.cm$^{-3}$.

Das wesentliche Merkmal der vorliegenden Erfindung ist die Umwandlung der aus Aluminiumoxidgranulaten durch Druckanwendung erzeugten Formkörper in harte und verschleißfeste Mahlkörper in einem Schachtofen. Schachtöfen, in denen sich bekanntlich stückiges oder stückig gemachtes Material im Gegenstrom zu einem Reaktionsgas durch einen vertikalen Schacht bewegt, sind seit langem bekannt.

Sie werden bei der Aufarbeitung und Reduktion von Erzen, bei der Erzeugung von Branntkalk, Zement u.a. eingesetzt. Ihr Einsatz zur Herstellung von Massenartikeln in der keramischen Industrie, z.B. Ziegel-, Feuerfest- oder Porzellan-Industrie, ist jedoch unbekannt. Für den Fachmann war es daher keinesfalls naheliegend, anstelle der bisher verwendeten Kammeröfen, Tunnelöfen, Herdwagenöfen u.a. nunmehr Schachtöfen bei der Herstellung von Massenartikeln zu verwenden. Verfahrenstechnisch sind Schachtöfen Wanderbett-Reaktoren, welche bis jetzt zum Brennen von geformten Rohlingen als völlig ungeeignet angesehen worden sind. Daß Rohlinge in Schachtöfen durch Brand in formtreue und haltbare Fertigprodukte umgewandelt werden können, war für den Fachmann neu und überraschend.

Bei dem neuen Verfahren werden als Bindemittel ausschließlich organische Bindemittel oder Bindemittelgemische verwendet, also temporäre Bindemittel, die während des Brennvorganges verschwinden. Sie werden zweckmäßigerweise in Mengen von 0,5 bis 2,5 Gew.%, bezogen auf Aluminiumoxid, verwendet. Derartige Binder sind Handelsprodukte, z.B. solche auf Basis von Polyvinylalkohol, Polysacchariden und modifizierter Cellulose.

Bei der Herstellung von Aluminiumoxidgranulaten in Sprühtrocknern werden anstelle von Aluminiumoxidpulvern Suspensionen von Aluminiumoxidpulvern in Wasser eingesetzt. Mit Vorteil werden hierbei auch Verflüssiger eingesetzt. Derartige Hilfsmittel sind dem Fachmann bekannt. Je nach Verwendungszweck werden organische oder anorganische Mittel in Mengen von 0,1 bis 1,5 Gew.%, bezogen auf Feststoffgehalt, eingesetzt. Häufig angewandte Verflüssiger sind beispielsweise solche auf Basis von Natriumsilikat, Huminaten und Phosphaten. Besonders geeignet ist bei dem neuen Verfahren das im Handel erhältliche DOLAPIX CE 64 der Firma Zschimmer & Schwarz GmbH, Lahnstein, das eine alkalifreie Zubereitung auf Carbonsäurebasis ist.

Der Feststoffgehalt der Aluminiumoxidsuspension sollte zwischen 65 und 75 Gew.% liegen.

Erwähnenswert ist an dieser Stelle, daß bei Durchführung des neuen Verfahrens selbstverständlich auch andere Granuliervorrichtungen eingesetzt werden können, z.B. Granulierteller.

Anhand der schematischen Zeichnung und dem nachfolgenden Beispiel soll nunmehr der Erfindungsgegenstand verdeutlicht und näher erläutert werden.

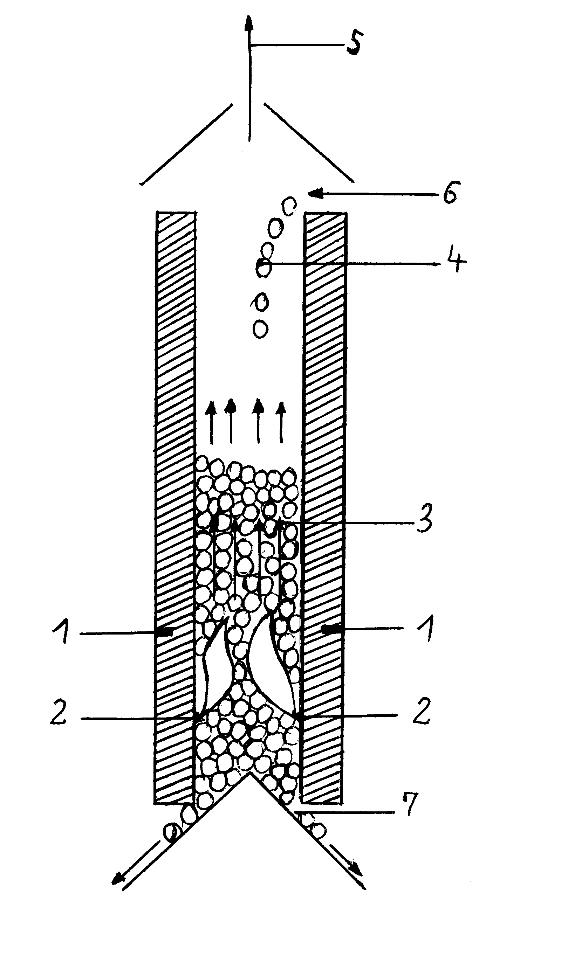

Mit 1 sind in der Zeichnung die Wände des Schachtofens bezeichnet. Die Brenner sind mit 2 bezeichnet. Die aufsteigenden Verbrennungsgase 3 passieren das aus Formkörpern 4 bestehende Wanderbett im Schachtofen. Sie verlassen den Schachtofen über die Gicht 5. Die Formkörper 4 werden bei 6 in den Schachtofen gebracht. Sie verlassen ihn über den Austrag 7 und werden nach Abkühlung ihrer Verwendung zugeführt.

Beispiel

    Als Ausgangsstoffe werden verwendet:
1000 kg    calcinierte Tonerde 99,6%ig
2 kg    DOLAPIX CE 64
    (Verflüssiger auf Basis einer alkalifreien Carbonsäurezubereitung, Handelsprodukt der Fa. Zschimmer & Schwarz GmbH, Lahnstein)
  Bindersystem, bestehend aus
10 kg    OPTAPIX PA 4G
    (schnell in Wasser löslicher Polyvinylalkohol, Handelsprodukt der Fa. Zschimmer & Schwarz GmbH, Lahnstein)
2 kg    OPTAPIX PS 13
    (modifiziertes Polysaccharid der Fa. Zschimmer & Schwarz GmbH, Lahnstein)
5 kg    MULREX 575
    (Wachsemulsion, Handelsprodukt der Fa. Mobiloil)

Die in fester Form als Handelsprodukte auf dem Markt erhältlichen temporären Binder OPTAPIX PA 4G und OPTAPIX PS 13 werden vor ihrem Einsatz vollständig in Wasser gelöst und der in flüssiger Form gelieferte Binder MULREX 575 im Volumenverhältnis 1:1 mit Wasser verdünnt.

Die Wasserzugabe wird im vorliegenden Beispiel so bemessen, daß nach Vermischung mit der Tonerde und dem Verflüssiger eine Suspension (Schlicker) mit einem Feststoffgehalt von 68 % vorliegt.

Die Tonerde wird vor der Herstellung des Schlickers in an sich bekannter Weise in einer Mühle, hier Kugelmühle, desagglomeriert, d.h. in Primärkristalle zerlegt. Hierfür werden etwa 2 Stunden benötigt. Die Schlickerherstellung kann sowohl in einem Rührbottich als auch in der Mühle erfolgen. Letzteres jedoch nur unter der Voraussetzung, daß die Mühlentemperatur nicht höher liegt als bei 50 °C, der Temperaturanstieg während des Mahlvorganges also gering ist.

Das Litergewicht des hergestellten Schlickers liegt bei 1,95 +/- 0,05 kg.

Die Verarbeitung des Schlickers zu einem Trockenprodukt (Bildung von Granulaten) wird in einem Sprühtrockner der Fa. Dorst-Maschinen und Anlagenbau GmbH & Co. durchgeführt. Die Lufttemperatur liegt bei der Eingangsdüse bei 350 °C und am Ausgang des Trockners bei etwa 80 °C.

Erhalten wird ein Sprühgranulat mit einer Restfeuchte von 0,5 +/- 0,1 % und einem Schüttgewicht von 1,20 +/- 0,05 kg/l. 60 % des Sprühproduktes besitzen einen Korndurchmesser von 170 bis 220 $\mu$m, während der Korndurchmesser des gesamten Sprühproduktes, also aller Granulate, zwischen 50 und 500 $\mu$m liegt.

Die Verpressung des Sprühproduktes wird in einer axialen Presse oder einer isostatischen Presse der Fa. Dorst-Maschinen und Anlagenbau GmbH & Co. vorgenommen. Die Preßdrücke liegen entweder bei 300, 350, 400, 450, 500, 550 oder 600 bar. Die Formkörper, deren Durchmesser bei 35 mm bzw. deren Verhältnis Durchmesser : Höhe bei 45 mm : 45 mm liegt, zeigen eine gute Grünfestigkeit. Bei einer Fallhöhe von einem Meter werden Risse oder Dellen an ihnen nicht beobachtet.

Die Versuchsergebnisse sind in der beiliegenden Tabelle niedergelegt.

Die Tabelle zeigt, daß erwartungsgemäß die Rohdichte der Formkörper mit dem Preßdruck zunimmt. Überraschend ist, daß optimale Brenndichten bereits bei Temperaturen von 1550 °C bis 1600 °C erzielt werden. Die Brenndichten verbessern sich nicht mit Erhöhung der Temperatur. Wie REM-Aufnahmen gezeigt haben, verschlechtern sich mit der Erhöhung der Brenntemperatur die Eigenschaften der Mahlkörper, vermutlich wegen des nicht erwünschten Kristallwachstums.

# EP 0 474 898 A1

T a b e l l e

| Preßdruck (bar) | Rohdichte | Brenndichte | Schwindung |
|---|---|---|---|
| Brenntemperatur 1550 °C | | | |
| 300 | 2,22 | 3,85 | 16,7 |
| 350 | 2,20 | 3,86 | 16,3 |
| 400 | 2,22 | 3,86 | 16,8 |
| 450 | 2,21 | 3,85 | 16,5 |
| 500 | 2,27 | 3,86 | 16,3 |
| 550 | 2,26 | 3,86 | 17,1 |
| 600 | 2,27 | 3,86 | 15,7 |
| Brenntemperatur 1600 °C | | | |
| 300 | 2,22 | 3,85 | 15,2 |
| 350 | 2,20 | 3,86 | 17,1 |
| 400 | 2,22 | 3,86 | 16,4 |
| 450 | 2,21 | 3,86 | 17,7 |
| 500 | 2,27 | 3,85 | 15,9 |
| 550 | 2,26 | 3,86 | 15,3 |
| 600 | 2,27 | 3,74 | 15,4 |
| Brenntemperatur 1650 °C | | | |
| 300 | 2,22 | 3,85 | 16,7 |
| 350 | 2,20 | 3,86 | 16,3 |
| 400 | 2,22 | 3,85 | 17,0 |
| 450 | 2,21 | 3,84 | 16,3 |
| 500 | 2,27 | 3,85 | 16,5 |
| 550 | 2,26 | 3,84 | 16,0 |
| 600 | 2,27 | 3,83 | 15,8 |
| Brenntemperatur 1700 °C | | | |
| 300 | 2,22 | 3,82 | 16,5 |
| 350 | 2,20 | 3,80 | 16,5 |
| 400 | 2,22 | 3,82 | 17,8 |
| 450 | 2,21 | 3,78 | 17,2 |
| 500 | 2,27 | 3,78 | 16,1 |
| 550 | 2,26 | 3,77 | 16,0 |
| 600 | 2,27 | 3,78 | 16,4 |

**Patentansprüche**

1. Verfahren zur Herstellung von Mahlkörpern aus Aluminiumoxid durch Verformung von gemahlenem Aluminiumoxid unter Anwendung von Druck und anschließendem Brand der erzeugten Formkörper bei

5

Temperaturen von mindestens 1500 °C, dadurch gekennzeichnet, daß gemahlenes und gegebenenfalls desagglomeriertes Aluminiumoxid mit 0,5 bis 2,5 Gew.%, bezogen auf Aluminiumoxid, eines organischen Bindemittels oder organischen Bindemittelgemisches vermischt, granuliert und zu Mahlkörpern verpreßt wird, und die erzeugten Formkörper anschließend in einem Schachtofen bei Temperaturen von 1500 °C bis 1850 °C gebrannt und in Mahlkörper umgewandelt werden.

2. Verfahren nach Anspruch 1, dadurch gekennzeichnet, daß die Formkörper in einem Schachtofen bei Temperaturen von 1550 °C bis 1800 °C gebrannt und in Mahlkörper umgewandelt werden.

3. Verfahren nach den Ansprüchen 1 und 2, dadurch gekennzeichnet, daß gemahlenes und gegebenenfalls desagglomeriertes Aluminiumoxid mit 0,1 bis 1,5 Gew.% eines organischen oder anorganischen Verflüssigungsmittels vermischt, granuliert und zu Mahlkörpern verpreßt wird.

4. Verfahren nach den Ansprüchen 1 bis 3, dadurch gekennzeichnet, daß die Formkörper solange gebrannt werden, bis die Dichte der Mahlkörper mindestens 3,5, insbesondere 3,75 bis 3,95 beträgt.

5. Verfahren nach den Ansprüchen 1 bis 4, dadurch gekennzeichnet, daß die Granulierung in einem Sprühtrockner durchgeführt wird.

6. Verfahren nach dem Anspruch 5, dadurch gekennzeichnet, daß die Granulierung mit einer Aluminiumoxidsuspension durchgeführt wird, deren Feststoffgehalt zwischen 65 und 75 Gew.% liegt.

7. Verfahren nach den Ansprüchen 1 bis 4, dadurch gekennzeichnet, daß die Granulierung auf einem Granulierteller durchgeführt wird.

8. Verfahren nach den Ansprüchen 1 bis 7, dadurch gekennzeichnet, daß als Aluminiumoxid calcinierte Tonerde mit einem Aluminiumoxidgehalt von mindestens 99 Gew.% eingesetzt wird.

9. Verfahren nach den Ansprüchen 1 bis 9, dadurch gekennzeichnet, daß als Aluminiumoxid Schmelzkorund eingesetzt wird.

10. Verfahren nach den Ansprüchen 1 bis 9, dadurch gekennzeichnet, daß die Formkörper in einem Schachtofen gebrannt werden, dessen Verhältnis Höhe : Durchmesser zwischen 10 : 1 und 8 : 1 liegt.

**Europäisches Patentamt**

**EUROPÄISCHER RECHERCHENBERICHT**

Nummer der Anmeldung

**EP 90 11 7433**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-00 000 (LATEST)DERWENT PUBLICATIONS LIMITED,LONDON,GB. ACCESSION NUMBER 87-281816 (WEEK 8740) & JP62197166 (DAIICHI KASEI KK 31/08/1987) <br> – – – | 1,3,6 | C 04 B 35/10 <br> C 09 K 3/14 <br> B 02 C 17/20 |
| A | WO-A-0 000 000 (LATEST)DERWENT PUBLICATIONS LIMITED,LONDON,GB. ACCESSION NUMBER 83-737979 (WEEK 8333) & JP58115070 (SHOWA DENKO KK 08/07/83 ) <br> – – – | 1-2 | |
| A | PATENT ABSTRACTS OF JAPAN <br> & JP-A-58 166926 (NIPPON TOKUSHU TOGYO KK) 03 Oktober 1983, <br> * das ganze Dokument * <br> – – – | 5 | |
| A | WO-A-0 000 000 (LATEST)DERWENT PUBLICATIONS LIMITED,LONDON,GB. ACCESSION NUMBER 89-348675 (WEEK 8948) & DD269285 (VEB WERKZEUG 7 OKTOBER 28/06/1989) <br> – – – | 9 | |
| A | WO-A-0 000 000 (LATEST)DERWENT PUBLICATIONS LIMITED,LONDON,GB. ACCESSION NUMBER 86-098574 (WEEK 8615) & JP61044756 (MITSUI ALUMINIUM KK 04/03/1986) <br> – – – | 1,3,4,7 | **RECHERCHIERTE SACHGEBIETE (Int. Cl.5)** |
| A | CHEMICAL ABSTRACTS, vol. 72, no. 12, 23 März 1970 Columbus, Ohio, USA J.D.WEYAND: "Ceramic grinding media made of bonded alumina particles" ref. no. 58663W <br> * Zusammenfassung * <br> – – – | 1,7 | C 04 B <br> C 09 K <br> B 02 C |
| A | EP-A-0 384 489 (W.R.GRACE & CO.) <br> – – – <br> –/– | | |

Der vorliegende Recherchenbericht wurde für alle Patentansprüche erstellt

| Recherchenort | Abschlußdatum der Recherche | Prüfer |
|---|---|---|
| Den Haag | 03 Mai 91 | HARBRON J.L. |

**Europäisches
Patentamt**

# EUROPÄISCHER
# RECHERCHENBERICHT

Nummer der Anmeldung

## EP 90 11 7433

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 131 442 (MINERALIMPEX MAGJAR OLAJ-ES BANYATERMEK KÜKERESKEDELMI) – – – | | |
| A | FR-A-2 541 590 (LCC-CICE) – – – – – | | |

|  |
|---|
| RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| Den Haag | 03 Mai 91 | HARBRON J.L. |